(19) Europäisches Patentamt / European Patent Office / Office européen des brevets

(11) **EP 2 484 445 A1**

(12) **EUROPEAN PATENT APPLICATION**
published in accordance with Art. 153(4) EPC

(43) Date of publication:
**08.08.2012 Bulletin 2012/32**

(51) Int Cl.:
**B01J 35/02** (2006.01)  **B01J 37/02** (2006.01)
**C09D 1/00** (2006.01)  **C09D 5/16** (2006.01)
**C09D 7/12** (2006.01)  **C09D 201/00** (2006.01)
**E04F 13/02** (2006.01)  **E04F 13/08** (2006.01)

(21) Application number: **10820521.2**

(22) Date of filing: **28.09.2010**

(86) International application number:
**PCT/JP2010/066837**

(87) International publication number:
**WO 2011/040406 (07.04.2011 Gazette 2011/14)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228171**

(71) Applicant: **Toto Ltd.**
**Fukuoka 802-8601 (JP)**

(72) Inventors:
• **HAYAKAWA Makoto**
**Kitakyushu-shi**
**Fukuoka 802-8601 (JP)**
• **KITAZAKI Satoru**
**Kitakyushu-shi**
**Fukuoka 802-8601 (JP)**
• **KAMESHIMA Junji**
**Kitakyushu-shi**
**Fukuoka 802-8601 (JP)**
• **OMOSHIKI Koji**
**Kitakyushu-shi**
**Fukuoka 802-8601 (JP)**
• **KANNO Mitsuyoshi**
**Kitakyushu-shi**
**Fukuoka 802-8601 (JP)**

(74) Representative: **Grünecker, Kinkeldey, Stockmair & Schwanhäusser**
**Leopoldstrasse 4**
**80802 München (DE)**

(54) **PHOTOCATALYST-COATED OBJECT AND PHOTOCATALYST COATING LIQUID THEREFOR**

(57)    Disclosed is a photocatalyst-coated body with various excellent properties, especially excellent weatherability and decomposition property of harmful gases, while suppressing corrosion of a substrate, especially of an organic substrate. The photocatalyst-coated body comprises a substrate and a photocatalyst layer formed on the substrate, wherein the photocatalyst layer contains, as its main components, photocatalyst particles in the range between more than 1% by mass and less than 3% by mass and inorganic oxide particles in the range between more than 92% by mass and less than 99% by mass, relative to 100% by mass of totality of the photocatalyst layer. This photocatalyst-coated body can also be used especially in tropical and subtropical regions in low latitudes, where the amount of ultraviolet light is abundant and weather conditions of high temperature and high humidity prevail.

EP 2 484 445 A1

**Description**

[Technical Field]

The present invention relates to a photocatalyst-coated body used for an exterior material of an architectural structure and the like, and to a photocatalytic coating liquid for forming the same.

[Background Art]

In recent years, a photocatalyst such as titanium oxide has been used in many applications such as an exterior material of an architectural structure. By use of a photocatalyst, various kinds of harmful substances can be decomposed utilizing a photo-energy, or dirt attached onto the surface of a substrate can be easily washed out with water by hydrophilizing the surface thereof coated with a photocatalyst.

For example, a technique for obtaining a photocatalyst body by forming a coat film containing a photocatalytic titanium dioxide and a silica sol as a binder component onto a substrate is known (for example, JP H11(1999)-169727A (PTL 1)). In this technique, it is reported that additive amount of the silica sol based on $SiO_2$ is 20 to 200 parts by weight relative to titanium dioxide.

In the formulation wherein such photocatalyst layer is formed on the surface of a substrate, if the substrate is an organic material, the material might be decomposed or deteriorated by a photocatalytic activity of the photocatalyst. To solve this problem, a technique of protecting the substrate as underlayment from deterioration due to the photocatalytic action by providing an adhesive layer such as a silicon-modified resin between the photocatalyst layer and the substrate is known (WO 97/00134 (PTL 2)). In this prior art, an example with more than 20% by weight of the photocatalyst is shown and it is claimed that decomposition or deterioration of the substrate was effectively prevented.

Further, a proposal is made to prevent decomposition or deterioration of the substrate by providing an intermediate layer containing a silicon-modified resin and an organic fungicide between the photocatalyst layer and the substrate (JP 4092434 B (PTL 3)).

If the amount of the photocatalyst in the photocatalyst layer is small, possibility of decomposition or deterioration of the substrate as described above becomes small; as a result, however, the action of the photocatalyst might become small, too. Accordingly, although the photocatalyst layer having the photocatalyst of 5% or less by weight is disclosed in WO 98/03607 (PTL 4), JP 2004-51644A (PTL 5), and so on, it is difficult to confirm that those technologies provide an appropriate composition or structure to realize various properties, especially a decomposition property of harmful gases. For example, in WO 98/03607, amount of silica particles present relative to the photocatalyst is extremely smaller as compared to that of the present invention, and JP 2004-51644A is different from the present invention with regard to addition of a hydrophobic resin.

[Citation List]

[Patent Literature]

PTL 1: JP H11(1999)-169727A
PTL 2: WO 97/00134
PTL 3: JP 4092434 B
PTL 4: WO 98/03607
PTL 5: JP 2004-51644A

[Summary of the Invention]

The present inventors have found that, by constructing a photocatalyst layer containing photocatalyst particles and inorganic oxide particles with a specific ratio therebetween and having a specific composition containing no or as little as possible hydrolyzable silicone, a photocatalyst-coated body with various excellent properties, especially excellent weatherability and decomposition of harmful gases, could be obtained while suppressing corrosion of a substrate, especially of an organic substrate.

Accordingly, it is an object of the present invention is to provide a photocatalyst-coated body with various excellent properties, especially excellent weatherability and decomposition of harmful gases, while suppressing corrosion of a substrate, especially of an organic substrate, and to provide a photocatalytic coating liquid for forming the photocatalyst-coated body.

A photocatalyst-coated body according to the present invention comprises a substrate and a photocatalyst layer formed on the substrate, wherein the photocatalyst layer comprises photocatalyst particles in the range between more than 1% by mass and less than 3% by mass, inorganic oxide particles in the range between more than 92% by mass and less than 99% by mass, and a binder in the range between 0% or more by mass and less than 5% by mass, relative to 100% by mass of totality of the photocatalyst layer.

A photocatalytic coating liquid according to the present invention is used for producing the foregoing photocatalyst-coated body and comprises a solvent, photocatalyst particles in the range between more than 1% by mass and less than 3% by mass, inorganic oxide particles in the range between more than 92% by mass and less than 99% by mass, and a binder in the range between 0% or more by mass and less than 5% by mass, relative to 100% by mass of totality of dried substances in the photocatalytic coating liquid.

A photocatalyst-coated body according to the present invention has various excellent properties, especially excellent weatherability and decomposition of harmful gases, while effectively suppressing corrosion of a substrate, especially of an organic substrate. In addition, according to preferred embodiments of the present invention, the photocatalyst-coated body also having excellent hydrophilicity and various excellent intended coat properties (transparency, film strength, and so on) can be provided.

[Description of Embodiments]

Photocatalyst-coated body

According to an aspect of the present invention, the photocatalyst-coated body comprises a substrate and a photocatalyst layer formed on the substrate, wherein the photocatalyst layer contains photocatalyst particles in the range between more than 1.0% by mass and less than 3.0% by mass, inorganic oxide particles in the range between more than 92.0% by mass and less than 99.0% by mass, and a binder in the range between 0% or more by mass and less than 5.0% by mass, relative to 100% by mass of totality of the photocatalyst layer.

The photocatalyst layer according to the present invention contains considerably smaller amount of a photocatalyst as compared to the amount generally recognized necessary in the past relative to the amount of a photocatalyst-coated body as well as the amount of inorganic oxide particles. It is considered that, because of such small amount of the photocatalyst, direct contact between the photocatalyst and the substrate can be suppressed, thereby leading to effective suppression of decomposition or corrosion of the substrate. On the other hand, photocatalyst activities, especially the decomposition activity to harmful gases, are maintained or even improved in spite of the small amount of the photocatalyst used, with realizing high weatherability; this can be regarded as an unexpected fact to those skilled in the art.

The reason for the unexpected effect of the action of the photocatalyst-coated body of the present invention is not clear, but it may be assumed as following. However, explanation hereunder is only assumption, and thus the present invention is not limited at all by this explanation.

The photocatalyst layer of the present invention contains essentially two kinds of particles, photocatalyst particles and inorganic oxide particles, so that there are abundant spaces among these particles. It is considered that, if a large amount of a hydrolyzable silicone that is widely used as a binder of a photocatalyst layer is used, the spaces among the particles are filled compactly thereby hindering gas diffusion. In the present invention, the photocatalyst layer does not contain a hydrolyzable silicone, or even if it does contain a hydrolyzable silicone, the amount thereof is small relative to the amount of the photocatalyst layer, totality of which is taken as 100% by mass, so that the spaces among the particles can be adequately secured. It is considered that the spaces formed thereamong realize a structure with which harmful gases such as NOx and SOx can diffuse easily into the photocatalyst layer; as a result, the harmful gases can contact with the photocatalyst particles efficiently so that the gases can be decomposed by action of the photocatalyst. In addition, in the photocatalyst-coated body of the present invention, especially in weatherability of the substrate that contains a resin containing an organic substance, there are a negative effect that the photocatalyst attacks the substrate and a positive effect that an amount of ultraviolet light to the substrate is reduced by absorption thereof by the photocatalyst itself; in such a circumstance, it can be considered an unexpected fact that there is a balance between amounts of the photocatalyst and the inorganic oxide with which the positive effect overcomes the negative effect and the spaces formed thereamong.

Because of the working effects and the characteristics as mentioned above, the photocatalyst-coated body of the present invention can also be used especially in tropical and subtropical regions in low latitudes, where the amount of ultraviolet light is abundant and weather conditions of high temperature and high humidity prevail.

Substrate

In the present invention, the substrate may be any material regardless of an inorganic material and an organic material, and there is no particular restriction with regard to the form thereof, as far as the photocatalyst layer can be formed thereon.

Examples of a preferred substrate from the material point of view include metal, ceramics, glass, resin, rubber, stone, cement, concrete, fiber, cloth, wood, paper, a combination thereof, a laminate thereof, and material whose surface has at least one coat layer of them.

Examples of a preferred substrate from the application point of view include a general exterior material including a construction material, an exterior material of a construction structure, a window frame, a window glass, a structure member material, an exterior material and a coating material of a vehicle, an outer material of a mechanical equipment and an article, a dust proofing cover and a coat material thereof, a traffic sign board, various display equipment, a commercial tower, a sound-seal traffic wall, a sound-seal railway wall, a bridge, armoring and coating of a guard rail, interior material and coating of a tunnel, an insulator, a solar cell cover, a heat collector cover of a solar water heater, an agricultural greenhouse, an illuminating light cover for vehicle, an outdoor lighting apparatus, a table; and a film, a sheet, and a seal with which surface of the foregoing materials is adhered.

According to a preferred embodiment of the present invention, the substrate contains a resin containing an organic substance on its surface. Totality of the substrate may be composed of an organic material, and also the surface of the substrate composed of an inorganic material may be covered with an organic material (for example, a decorative board). In addition, an inorganic pigment, an inorganic extender pigment, and the like, other than the resin containing an organic material, may be added. The photocatalyst-coated body of the present invention resists to corrode the organic material that is easily damaged by an action of the photocatalyst; and thus, the photocatalyst-coated body having excellent performance due to a single photocatalyst layer can be produced without interposing an intermediate layer.

According to another preferred embodiment of the present invention, the foregoing resin may be a non-silicone resin. In the past, in the photocatalyst-coated body, influence of the photocatalytic activity of the photocatalyst layer on the substrate has been generally suppressed by providing a layer containing a silicone resin between the substrate and the photocatalyst layer. According to the present invention, the photocatalyst layer can be formed directly on the non-silicone resin, not on the silicone resin, which has been generally used in the past as mentioned above. As a result, the present invention is extremely advantageous from a view point that its use and application ranges are extended widely.

Photocatalyst layer of the photocatalyst-coated body

In the present invention, the photocatalyst layer includes, for example, a state of a partial film, in addition to a complete film, provided that the photocatalyst particles exist on the substrate surface. In addition, the photocatalyst layer may be present discretely on the substrate surface, like islands. According to a preferred embodiment of the present invention, this photocatalyst layer is obtained by applying a coating solution.

According to an embodiment of the present invention, the photocatalyst layer of the photocatalyst-coated body contains photocatalyst particles in the range between more than 1.0% by mass and less than 3.0% by mass, inorganic oxide particles in the range between more than 92.0% by mass and less than 99.0% by mass, and a binder in the range between 0% or more by mass and less than 5.0% by mass, relative to 100% by mass of totality of the photocatalyst layer. According to a preferred embodiment of the present invention, preferably the photocatalyst layer contains photocatalyst particles in the range between 1.1% or more by mass and 2.9% or less by mass and the inorganic oxide particles in the range between 92.1% or more by mass and 98.9% or less by mass, relative to 100% by mass of totality of the photocatalyst layer.

According to a preferred embodiment of the present invention, the photocatalyst layer has a film thickness in the range between 0.5 $\mu$m or more and 3 $\mu$m or less. More preferably the film thickness is in the range between 0.5 $\mu$m or more and 3.0 $\mu$m or less, or still more preferably in the range between 1.0 $\mu$m or more and 2.0 $\mu$m or less. In this range, an ultraviolet light penetrating to interface between the photocatalyst layer and the substrate can be sufficiently attenuated, and thus, weatherability can be improved. In addition, the photocatalyst particles, the content of which is smaller than that of the inorganic particles, can be increased in the direction of film thickness, and thus, the decomposition property of harmful gases can be improved. Further in addition, excellent properties in transparency and film strength can be obtained.

The photocatalyst particles to be used in the present invention are not particularly limited, provided that the particles have the photocatalytic activity. Preferred examples thereof include particles of a metal oxide such as titanium oxide ($TiO_2$), ZnO, $SnO_2$ $SrTiO_3$, $WO_3$, $Bi_2O_3$, and $Fe_2O_3$, among which titanium oxide particles are more preferable, while anatase type titanium oxide particles are still more preferable. Titanium oxide has a high band-gap energy, thereby requiring an ultraviolet light for photoexcitation and not absorbing visible light during photoexcitation; and thus, titanium oxide is advantageous in that coloring due to complementary color components does not take place. Titanium oxide is available in various forms such as a powder, a sol, and a solution; any form can be used as far as the form shows the photocatalytic activity.

According to a preferred embodiment of the present invention, an average particle diameter of the photocatalyst particles is in the range between 10 nm or more and 100 nm or less, or more preferably in the range between 10 nm or more and 60 nm or less. Meanwhile, the average particle diameter thereof is calculated as the number average by measuring length of 100 particles randomly selected from particles located within a visible field magnified 200,000 times by a scanning electron microscope. Shape of the particles is preferably a true sphere, but a rough circle or an oval may be allowed; in the latter cases length of the particles is roughly calculated by an equation of (long diameter+short diameter)/2.

The inorganic oxide particles to be used in the present invention are not particularly limited, provided that the inorganic oxide particles can form a layer together with the photocatalyst particles. Preferable examples thereof include particles of a single oxide such as silica, alumina, zirconia, ceria, yttria, boronia, magnesia, calcia, ferrite, amorphous titania, and hafnia, and particles of a composite oxide such as barium titanate and calcium silicate, while silica particles are more preferable.

An average particle diameter of the inorganic oxide particles of the present invention is preferably in the range between more than 5 nm and 100 nm or less, or more preferably in the range between 10 nm or more and 50 nm or less. Meanwhile, the average particle diameter thereof is calculated as the number average by measuring length of 100 particles randomly selected from particles located within a visible field magnified 200,000 times by a scanning electron microscope. Shape of the particles is preferably a true sphere, but a rough circle or an oval may be allowed; in the latter cases length of the particles is roughly calculated by an equation of (long diameter+short diameter)/2.

The photocatalyst layer of the present invention may contain at least one binder selected from the group consisting of a product obtained by drying hydrolyzable silicone, an amorphous inorganic oxide, a resin binder, and an alkaline silicate, wherein these substances contribute, as the binder, to enhancement of strength of the photocatalyst layer. However, there is a case that the presence of these binders exerts an influence on formation of the spaces which are advantageous in realization of the photocatalytic activity or in decomposition of harmful gases. Accordingly, in the present invention, the foregoing binder may be allowed as an arbitrary component contained therein, provided that the amount thereof is to such a degree as to secure the decomposition property of harmful gases, while it is preferable that the binder be not added or additive amount thereof be small. Depending on circumstances, it is preferable that the binder be not contained therein at all. Specifically, content of the binder is in the range between 0% or more by mass and less than 5.0% by mass, or preferably 3.0% or less by mass, or most preferably 0% by mass, relative to 100% by mass of totality of the photocatalyst layer.

The product obtained by drying hydrolyzable silicone may be obtained by hydrolysis condensation of at least a part of at least one selected from the group consisting of, for example, a hydrolyzable silane containing at least one hydrolyzable silane unit with two to four functionalities, an organosilicone oligomer or a liquid organosilicone and a silicone emulsion obtained by hydrolysis condensation of at least a part of the foregoing hydrolyzable silane, to which an organosilicate oligomer or a liquid oraganosilicate has been added as an arbitrary component as needed.

As to the amorphous inorganic oxide, amorphous titanium oxide, amorphous silica, amorphous alumina, and the like, not having a shape of particle, can be suitably used. The amorphous inorganic oxides may be obtained by hydrolysis condensation of, for example, a metal alkoxide, a metal chelate, a metal peroxide, a metal salt of an inorganic acid, a metal salt of an organic acid, a metal halide, and the like.

As to the resin binder, binders having good weatherability, such as a fluorinated resin binder, a silicone-modified acryl binder, a silicone-modified epoxy binder, a silicone-modified urethane binder, and a silicone-modified polyester binder, are preferable, while there is a case that an acryl binder, an epoxy binder, and the like can be used.

As an embodiment of the resin binder, for example, a resin emulsion polymer can be used suitably. As to the resin emulsion polymer, polymers having good weatherability such as a silicone emulsion polymer, a fluorinated resin emulsion polymer, an acryl silicone emulsion polymer, a silicone-modified emulsion polymer, a silicone-modified urethane emulsion polymer, and a silicone-modified polyester emulsion polymer, are preferable, while there is a case that an acryl emulsion polymer and the like can be used.

As to the alkaline silicate, for example, sodium silicate, potassium silicate, and lithium silicate can be used suitably.

Furthermore, by adding at least one of metal or metal compound selected from the group consisting of vanadium, iron, cobalt, nickel, palladium, zinc, ruthenium, rhodium, copper, silver, platinum, and gold to the photocatalyst layer of the present invention, even higher antibacterial and fungicidal effects can be realized. However, it is desirable that the presence thereof does not exert influence on formation of the spaces among the photocatalyst particles and the inorganic oxide particles; and thus, the additive amount thereof may be minute and the amount necessary to realize its effect is minute. Specifically, the additive amount is preferably in the range between 0.01 and 10% by mass, or more preferably in the range between about 0.05 and about 5% by mass, relative to the photocatalyst. As to the metal compound, for example, gluconate, sulfate, malate, lactate, sulfate, nitrate, formate, acetate, and chelate of the foregoing metals can be suitably used.

Into the photocatalyst layer of the present invention may be added an inorganic salt and resin particles that are hardly soluble or insoluble in water, in addition to the photocatalyst particles, the inorganic oxide particles, and the binder as an arbitrary component; additive amount thereof may be in the range between 0% or more by mass and less than 10% by mass, or preferably 5% or less, or most preferably 0% by mass, relative to 100% by mass of totality of the photocatalyst layer. However, it is desirable that the presence thereof does not exert influence on formation of the spaces among the photocatalyst particles and the inorganic oxide particles.

As to the inorganic salt that is hardly soluble or insoluble in water, for example, aluminum hydroxide, boehmite, and calcium carbonate may be suitably used.

As to the resin particles, there is a case that gloss can be controlled by use of them in the form of a sphere or a plate from a view point of designing; and thus, the resin particles can be added in the range not to adversely affect the photocatalytic performance and weatherability.

Into the photocatalyst layer of the present invention may be added a ultraviolet-shielding material, an organic fungicide, and the like, in addition to the photocatalyst particles, the inorganic oxide particles, and the binder as an arbitrary component; additive amount thereof may be in the range between 0% or more by mass and less than 10% by mass, or preferably 5% or less, or most preferably 0% by mass, relative to 100% by mass of totality of the photocatalyst layer. However, it is desirable that the presence thereof does not exert influence on formation of the spaces among the photocatalyst particles and the inorganic oxide particles.

Photocatalytic coating liquid

According to an embodiment of the present invention, a photocatalytic coating liquid is used to form the photocatalyst-coated body of the present invention as mentioned above. The composition thereof contains a solvent, photocatalyst particles in the range between more than 1.0% by mass and less than 3.0% by mass, inorganic oxide particles in the range between more than 92.0% by mass and less than 99.0% by mass, and a binder in the range between 0% or more by mass and less than 5.0% by mass, relative to 100% by mass of totality of dried substances in the photocatalytic coating liquid.

According to a preferred embodiment of the present invention, more preferably the composition thereof contains the photocatalyst particles in the range between 1.1% or more by mass and 2.9% or less by mass and the inorganic oxide particles in the range between 92.1% or more by mass and 98.9% or less by mass, relative to 100% by mass of totality of dried substances in the photocatalytic coating liquid.

The photocatalyst particles to be used in the present invention are not particularly limited, provided that the particles have the photocatalytic activity. Preferred examples thereof include particles of a metal oxide such as titanium oxide ($TiO_2$) ZnO, $SnO_2$ $SrTiO_3$, $WO_3$, $Bi_2O_3$, and $Fe_2O_3$, among which titanium oxide particles are more preferable, while anatase type titanium oxide particles are still more preferable. Titanium oxide has a high band-gap energy, thereby requiring an ultraviolet light for photoexcitation and not absorbing visible light during photoexcitation; and thus, titanium oxide is advantageous in that coloring due to complementary color components does not take place. Titanium oxide is available in various forms such as a powder, a sol, and a solution; any form can be used as far as the form shows the photocatalytic activity.

According to a preferred embodiment of the present invention, an average particle diameter of the photocatalyst particles is in the range between 10 nm or more and 100 nm or less, or more preferably in the range between 10 nm or more and 60 nm or less. Meanwhile, the average particle diameter thereof is calculated as the number average by measuring length of 100 particles randomly selected from particles located within a visible field magnified 200,000 times by a scanning electron microscope. Shape of the particles is preferably a true sphere, but a rough circle or an oval may be allowed; in the latter cases length of the particles is roughly calculated by an equation of (long diameter+short diameter)/2.

The inorganic oxide particles to be used in the present invention are not particularly limited, provided that the inorganic oxide particles can form a layer together with the photocatalyst particles. Preferable examples thereof include particles of a single oxide such as silica, alumina, zirconia, ceria, yttria, boronia, magnesia, calcia, ferrite, amorphous titania, and hafnia, and particles of a composite oxide such as barium titanate and calcium silicate, while silica particles are more preferable.

An average particle diameter of the inorganic oxide particles of the present invention is preferably in the range between more than 5 nm and 100 nm or less, or more preferably in the range between 10 nm or more and 50 nm or less. Meanwhile, the average particle diameter thereof is calculated as the number average by measuring length of 100 particles randomly selected from particles located within a visible field magnified 200,000 times by a scanning electron microscope. Shape of the particles is preferably a true sphere, but a rough circle or an oval may be allowed; in the latter cases length of the particles is roughly calculated by an equation of (long diameter+short diameter)/2.

The photocatalytic coating liquid of the present invention preferably does not substantially contain at least one binder selected from the group consisting of a hydrolyzable silicone, a hydrolyzable silane, an amorphous inorganic oxide, a precursor to form the amorphous inorganic oxide, a resin binder, and an alkaline silicate, or more preferably does not contain the binder at all. These substances contribute, as the binder, to enhancement of strength of the photocatalyst layer. However, there is a case that the presence of these binders exerts an influence on formation of the spaces which are advantageous in realization of the photocatalytic activity or in decomposition of harmful gases. Accordingly, in the present invention, the foregoing binder may be allowed as an arbitrary component contained therein, provided that the amount thereof is to such a degree as to secure the decomposition property of harmful gases; while it is preferable that the binder be not added or additive amount thereof be small. Specifically, content of the binder is in the range between 0% or more by mass and 5.0% or less by mass, or preferably 3.0% or less by mass, or most preferably 0% by mass, relative to 100% by mass of totality of the dried substances in the photocatalytic coating liquid.

As to the hydrolyzable silicone, at least one selected from the group consisting of, for example, an organosilicone oligomer or a liquid organosilicone and a silicone emulsion obtained by hydrolysis condensation of at least a part of a hydrolyzable silane having at least one hydrolyzable silane unit with two to four functionalities, to which an organosilicate oligomer or a liquid oraganosilicate has been added as an arbitrary component as needed - can be suitably used.

As to the amorphous inorganic oxide as the oxide equivalent, amorphous titanium oxide, amorphous silica, amorphous alumina, and the like, not having a shape of particle, can be suitably used. As to the precursor to form the amorphous inorganic oxide, an organometallic compound, an inorganic metal compound, and the like can be suitable used. As to the organometallic compound, a metal alkoxide such as titanium alkoxide, a metal peroxide such as titanium peroxide, a metal chelate such as titanium acetonate, an organosilicate, and the like can be suitably used.

As to the resin binder, binders having good weatherability, such as a fluorinated resin binder, a silicone-modified acryl binder, a silicone-modified epoxy binder, a silicone-modified urethane binder, and a silicone-modified polyester binder, are preferable, while there is a case that an acryl binder, an epoxy binder, and the like can be used.

Also as to the resin binder, a resin emulsion is preferable because it can be dispersed into water easily. For example, emulsions having good weatherability such as a silicone emulsion, a fluorinated resin emulsion, an acryl silicone emulsion, a silicone-modified emulsion, a silicone-modified urethane emulsion, and a silicone-modified polyester emulsion are preferable as the resin emulsion; but there is a case that an acryl emulsion and the like can be used.

As to the alkaline silicate, for example, sodium silicate, potassium silicate, and lithium silicate can be used suitably.

Furthermore, by adding at least one kind of metal or metal compound selected from the group consisting of vanadium, iron, cobalt, nickel, palladium, zinc, ruthenium, rhodium, copper, silver, platinum, and gold to the photocatalytic coating liquid of the present invention, even higher antibacterial and fungicidal effects can be realized. However, it is desirable that the presence thereof does not exert influence on formation of the spaces among the photocatalyst particles and the inorganic oxide particles; and thus, the additive amount thereof may be minute and the amount necessary to realize its effect is minute. Specifically, the additive amount is preferably in the range between 0.01 and 10% by mass, or more preferably in the range between about 0.05 and about 5% by mass, relative to the photocatalyst. As to the metal compound, for example, gluconate, sulfate, malate, lactate, sulfate, nitrate, formate, acetate, and chelate can be suitably used.

Into the photocatalytic coating liquid of the present invention may be added an inorganic salt and resin particles that are hardly soluble or insoluble in water, in addition to the photocatalyst particles, the inorganic oxide particles, and the binder as an arbitrary component; additive amount thereof may be in the range between 0% or more by mass and less than 10% by mass, or preferably 5% or less by mass, most preferably 0% by mass, relative to 100% by mass of dry substances in the photocatalytic coating liquid. However, it is desirable that the presence thereof does not exert influence on formation of the spaces among particles of the photocatalyst and the inorganic oxide.

As to the inorganic salt that is hardly soluble or insoluble in water, for example, aluminum hydroxide, boehmite, and calcium carbonate can be suitably used.

As to the resin particles, there is a case that gloss can be controlled by use of them in the form of a sphere or a plate from a view point of designing; and thus, the resin particles can be added in the range not to adversely affect the photocatalytic performance and weatherability.

The photocatalytic coating liquid of the present invention is produced by dissolving or dispersing each component described in the photocatalyst layer with the foregoing mass ratio into a solvent. Here, titanium oxide may be in any form such as a powder, a sol, and a solution. The inorganic oxide particles are preferably in the form of an aqueous colloid in water as a dispersing medium, or in the form of an organosol wherein the inorganic oxide particles are dispersed as the colloidal form into a hydrophilic solvent such as ethyl alcohol, isopropyl alcohol, and ethylene glycol, though colloidal silica is particularly preferable.

Into the photocatalytic coating liquid of the present invention may be added a ultraviolet-shielding material, an organic fungicide, a surfactant, an anti-foaming material, a pH-controlling material, a pigment, a thickener, and the like, in addition to the photocatalyst particles, the inorganic oxide particles, and the binder as an arbitrary component; additive amount thereof may be in the range between 0% or more by mass and less than 10% by mass, or preferably 5% or less, or most preferably 0% by mass, relative to 100% by mass of dried substances in the photocatalytic coating liquid. However, it is desirable that the presence thereof does not exert influence on formation of the spaces among the photocatalyst particles and the inorganic oxide particles.

The photocatalytic coating liquid of the present invention may contain a surfactant as an arbitrary component;

additive amount thereof may be in the range between 0% or more by mass and less than 10% by mass, or preferably in the range between 0% or more by mass and 8% or less by mass, or still more preferably in the range between 0% or more by mass and 6% or less by mass, relative to 100% by mass of dry substances in the photocatalytic coating liquid. Addition of the surfactant can make it possible to smoothen and homogenize the coated surface, namely leveling can be effected by the addition. The surfactant is an effective component to improve wetting properties of the photocatalytic coating liquid; but, if there is no concern as to the wetting properties, there is a case that it is preferable that the surfactant be not contained therein substantially or absolutely.

The surfactant may be arbitrarily selected in view of dispersion stability of the photocatalyst and the inorganic oxide particles and wetting properties applied onto the intermediate layer, while a non-ionic surfactant is preferable; more preferable examples thereof include an ether type non-ionic surfactant, an ester type non-ionic surfactant, a polyalkylene glycol type non-ionic surfactant, a fluorine-based non-ionic surfactant, and a silicon-based non-ionic surfactant.

As to the solvent, any solvent that can properly disperse or dissolve the foregoing components can be used; any one of water and an organic solvent or both may be used. Among the solvents usable in the photocatalytic coating liquid of the present invention, water is preferable because its influence on the environment is small. In addition, to improve leveling property at the time of film formation and to control drying properties, an organic solvent may be used. Preferable examples of the organic solvent include generally used solvents such as an alcohol; an ether; a ketone such as acetone, 2-butanone, methyl propyl ketone, methyl butyl ketone, and dipropyl ketone; an ester such as ethyl acetate, propyl acetate, isopropyl acetate, butyl acetate, amyl acetate, and ethyl butyrate; an aliphatic, an aromatic, and an alicyclic hydrocarbon such as benzene, toluene, xylene, chloroform, pentane, hexane, and cyclohexane; and a petroleum. These solvents may be used singly or as a mixture of them, while a water-soluble solvent is especially preferable. Examples of the water-soluble solvent include an alcohol, an ether, and a ketone; such as methanol, ethanol, modified ethanol, n-propanol, isopropanol, n-butanol, isobutanol, s-butanol, t-butanol, 1,3-butanediol, 2,3-butanediol, 1,4-butanediol, ethylene glycol, diethylene glycol, propylene glycol, dipropylene glycol, diethylene glycol monomethyl ether, diethylene glycol monoethyl ether, diethylene glycol monoisopropyl ether, diethylene glycol monobutyl ether, dipropylene glycol monomethyl ether, dipropylene glycol monoethyl ether, dipropylene glycol monoisopropyl ether, dipropylene glycol monobutyl ether, ethylene glycol dibutyl ether, diethylene glycol diethyl ether, diethylene glycol diisopropyl ether, triethylene glycol dimethyl ether, glycerine monomethyl ether, trimethylene glycol, N-methyl pyrrolidone, ethylene glycol monomethyl ether, propylene glycol monomethyl ether, propylene glycol monoethyl ether, propylene glycol monopropyl ether, 3,5-dimethyl-1-hexyne-3-ol, diacetone alcohol, and 3-methyl-3-methoxybutanol, wherein these solvents may be used singly or as a mixture of a plurality of them.

Concentration of solid components in the photocatalytic coating liquid of the present invention is not particularly limited, while the range between 1 and 10% by mass is preferable in view of easy application. Meanwhile, components in the photocatalyst coating composition are analyzed as following; the photocatalytic coating liquid is separated into a particle component and a filtrate by ultrafiltration, and then each of which is analyzed with an infrared spectroscopy, a gel permeation chromatography, a fluorescent X-ray spectroscopy, and so on; and the evaluation can be made by analyzing the obtained spectra.

Production method of the photocatalyst-coated body

The photocatalyst-coated body of the present invention can be produced by applying the photocatalytic coating liquid of the present invention onto the substrate. Application methods generally used, such as a brush coating, a roller coating, a spray coating, a roll coater, a flow coater, a dip coating, a flow coating, and a screen printing, can be used. After application of the coating solution on the substrate, drying may be done at normal temperature or by heating if necessary. However, if heating is made until sintering takes place, the space among the particles might become smaller thereby leading to insufficient photocatalytic activity; and thus, it is preferable to choose temperature and time so that formation of the space may not be influenced or may be influenced to a small degree. For example, the drying temperature is between 10°C or higher and 500°C or lower; and in the case that a resin is included at least in a part of the substrate, the drying temperature is preferably, for example, between 10°C or higher and 200°C or lower by considering a heat resistance temperature and the like of the resin.

As can be seen above, the photocatalyst-coated body of the present invention does not require interposing an intermediate layer between the photocatalytic body and the substrate, therefore the time and cost in production thereof can be reduced; and thus it is advantageous.

[Examples]

The present invention will be explained specifically by the following examples; but the present invention is not limited by these examples.

[Example 1]

As the substrate, a plain plate of a colored organic coated body (50 mm × 100 mm) was provided. This colored organic coated body was obtained by applying an acryl coating material containing carbon black powders (not containing silicon) onto a ceramic siding substrate treated with a sealer, followed by sufficient drying and curing the product thus obtained.

Then, the photocatalytic coating liquid was provided. This photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid $TiO_2$ to the solid $SiO_2$ being 1.10:98.90 with the solid concentration therein being controlled at 5.5% by mass by using water as the solvent.

The photocatalytic coating liquid thus obtained was applied, by a spray coating method with coating amount of 20 g/m$^2$, onto the preheated colored organic coated body mentioned above, which was then dried at normal temperature to form a photocatalyst layer, whereby obtaining the photocatalyst-coated body

[Example 2]

A sample was prepared under the conditions similar to those of Example 1 except that the coating amount of the photocatalytic coating liquid onto the colored organic coated body was changed to 30 g/m$^2$.

[Example 3]

A sample was prepared under the conditions similar to those of Example 1 except that the photocatalytic coating liquid was prepared by mixing an aqueous dispersion of an anatase type titania (acidic, an average particle diameter of 10 nm), a water-dispersible colloidal silica (acidic, alumina-coated, an average particle diameter of 15 nm), and a polycondensation product of tetraethoxy silane (in ethanol-water solvent, $SiO_2$-equivalent concentration of 40% by mass) so as to give mass ratio of the solid $TiO_2$, the solid component in the colloidal silica, and the dried $SiO_2$-equivale mass in the polycondensation product of tetraethoxy silane being 1.10:97.90:1.00 with the solid concentration therein being controlled at 5.5% by mass by using ethanol and water as the solvents.

[Example 4]

A sample was prepared under the conditions similar to those of Example 1 except that the photocatalytic coating liquid was prepared by mixing an aqueous dispersion of an anatase type titania (acidic, an average particle diameter of 10 nm) and a water-dispersible colloidal silica (acidic, alumina-coated, an average particle diameter of 15 nm) so as to give mass ratio of the solid $TiO_2$ to the solid component in the colloidal silica being 2.00:98.00 with the solid concentration therein being controlled at 5.5% by mass by using water as the solvent and that the coating amount of the photocatalytic coating liquid onto the colored organic coated body was changed to 15g/m$^2$.

[Example 5]

A sample was prepared under the conditions similar to those of Example 4 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid $TriO_2$ to the solid $SiO_2$ being 1.10:98.90 with the solid concentration therein being controlled at 5.5% by mass by using water as the solvent and that the coating amount of the photocatalytic coating liquid onto the colored organic coated body was changed to 20 g/m$^2$.

[Example 6]

A sample was prepared under the conditions similar to those of Example 5 except that the coating amount of the photocatalytic coating liquid onto the colored organic coated body was changed to 30 g/m$^2$

[Example 7]

A sample was prepared under the conditions similar to those of Example 1 except that the photocatalytic coating liquid was prepared by mixing an aqueous dispersion of an anatase type titania (acidic, an average particle diameter of 10 nm), a water-dispersible colloidal silica (acidic, alumina-coated, an average particle diameter of 15 nm), and a polycondensation product of tetraethoxy silane (in ethanol-water solvent with $SiO_2$-equivalent concentration of 40% by mass) so as to give mass ratio of the solid TiO$_2$ the solid component of the colloidal silica, and the dried SiO$_2$-equivalent mass in the polycondensation product of tetraethoxy silane being 2.00:96.00:2.00 with the solid concentration therein being controlled at 5.5% by mass by using ethanol and water as the solvents.

[Example 8]

A sample was prepared under the conditions similar to those of Example 1 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid TiO$_2$ to the solid SiO$_2$ being 2.90:97.10 and the solid concentration therein being controlled at 5.5% by mass by using water as the solvent.

[Comparative Example 1]

A sample was prepared under the conditions similar to those of Example 1 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid TiO$_2$ to the solid SiO$_2$ being 0.60:99.40 with the solid concentration therein being controlled at 5.5% by mass by using water as the solvent.

[Comparative Example 2]

A sample was prepared under the conditions similar to those of Example 4 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid TiO$_2$ to the solid SiO$_2$ being 3.00:97.00 with the solid concentration therein being controlled at 5.5% by mass by using water as the solvent.

[Comparative Example 3]

A sample was prepared under the conditions similar to those of Example 1 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid TiO$_2$ to the solid SiO$_2$ being 0.10:99.90 with the solid concentration therein being controlled at 5.5% by mass by using water as the solvent.

[Comparative Example 4]

A sample was prepared under the conditions similar to those of Example 1 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give mass ratio of the solid TiO$_2$ to the solid SiO$_2$ being 4.60:95.40 with the solid concentration therein being controlled at 5.5% by mass by using water as the solvent.

[Evaluation Experiment A]

Decomposition test of NOx for Examples 1 to 8 and Comparative Examples 1 to 4 was carried out as follows. Firstly, as a pretreatment, the foregoing samples were exposed to a BLB light having an emission line spectrum of 1 mW/cm$^2$ at a wavelength of 351 nm for 5 hours or more. Then, two of the coated samples were set in a reactor described in JIS R 1701-1. The light-shielded reactor was fed with an air adjusted at 25°C and 50% RH and mixed with about 1000 ppb of an NO gas at a rate of 1.5 L/min for 20 minutes. Thereafter, the BLB light having an emission line spectrum adjusted at 1 mW/cm$^2$ at a wavelength of 351 nm was irradiated for 20 minutes while keeping introduction of the gas. Thereafter, the reactor was shielded from the light again while introduction of the gas was continued. Amount of the removed NOx was calculated according to the following equation by using concentrations of NO and NO$_2$ before and after irradiation of the BLB light.

$$\text{Amount of removed NOx (ppb)} = [\text{NO(after irradiation)} - \text{NO(during irradiation)}] - [\text{NO}_2\text{(during irradiation)} - \text{NO}_2\text{(after irradiation)}]$$

The results are shown in Table 1.

[Evaluation Experiment B]

An outdoor exposure test was carried out in Miyakojima Island by placing the samples obtained by each of Examples 1 to 8 and Comparative Examples 2 and 4 on the exposure table facing to the south with an inclination angle of 20 degree from a horizontal line, as specified in JIS K 5600-7-6. The appearance thereof was visually confirmed after 12 months.
The obtained results are shown in Table 1. In the table, reference character G indicates that almost no change occurred, while reference character NG indicates that efflorescence was formed slightly.
[Table 1]

| | Examples | | | | | | | | Comparative Examples | | | |
|---|---|---|---|---|---|---|---|---|---|---|---|---|
| | 1 | 2 | 3 | 4 | 5 | 6 | 7 | 8 | 1 | 2 | 3 | 4 |
| Amount of $TiO_2$ | 1.10 | 1.10 | 1.10 | 2.00 | 2.00 | 2.00 | 2.00 | 2.90 | 0.60 | 3.00 | 0.10 | 4.60 |
| Amount of $SiO_2$ | 98.90 | 98.90 | 97.90 | 98.00 | 98.00 | 98.00 | 96.00 | 97.10 | 99.40 | 97.00 | 99.90 | 95.40 |
| Amount of polycondensation product | 0 | 0 | 1.00 | 0 | 0 | 0 | 2.00 | 0 | 0 | 0 | 0 | 0 |
| Amount of coating | 20 | 30 | 20 | 15 | 20 | 30 | 20 | 20 | 20 | 15 | 20 | 20 |
| Amount of solid component | 5.5 | 5.5 | 5.5 | 5.5 | 5.5 | 5.5 | 5.5 | 5.5 | 5.5 | 5.5 | 5.5 | 5.5 |
| ΔNOx | 92 | 114 | 60 | 103 | 116 | 161 | 90 | 214 | 30 | 120 | 5 | 329 |
| | G | G | G | G | G | G | G | G | NG | G | NG | G |
| Appearance after 12 months | G | G | G | G | G | G | G | G | | NG | | NG |

[Evaluation Experiments C]

The test method (9-point methylene blue test) according to JIS R 1703-2 (wet decomposition performance of a photocatalyst material) was carried out for the samples of Example 4 and Comparative Examples 1, 3, and 4 to obtain the decomposition activity index R. The results are shown in the following

[Table 2]

|  | Comparative Example 3 | Comparative Example 1 | Example 4 | Comparative Example 4 |
|---|---|---|---|---|
| Amount of $TiO_2$ | 0.10 | 0.60 | 2.00 | 4.50 |
| Amount of $SiO_2$ | 99.90 | 99.40 | 98.00 | 95.40 |
| Index R | 04 | 2.5 | 5.6 | 8.5 |

Indexes R of Comparative Examples 1 and 3 are in the relationship with the amount of the photocatalyst, shown by the equation R=4 2X-0.02 (wherein X is the amount of the photocatalyst), and indexes R of Example 4 and Comparative Example 4 are in the relationship with the amount of the photocatalyst, shown by the equation R=1 1X+34 (wherein X is the amount of the photocatalyst), wherein X at the intersection point of the two equations, namely amount of the photocatalyst, is 1.10. Accordingly, it can be seen from these experiments that the photocatalytic activity changes near 1.10% by weight of the amount of the photocatalyst.

**Claims**

1. A photocatalyst-coated body comprising a substrate and a photocatalyst layer formed on the substrate, the photocatalyst layer comprising:

   photocatalyst particles in the range between more than 1% by mass and less than 3% by mass,
   inorganic oxide particles in the range between more than 92% by mass and less than 99% by mass, and
   a binder in the range between 0% or more by mass and less than 5% by mass,
   relative to 100% by mass of totality of the photocatalyst layer.

2. The photocatalyst-coated body according to claim 1, wherein the photocatalyst layer comprises the photocatalyst particles in the range between 1.1 % or more by mass and 2.9% or less by mass and the inorganic oxide particles in the range between 92.1 % or more by mass and 98.9% or less by mass, relative to 100% by mass of totality of the photocatalyst layer.

3. The photocatalyst-coated body according to claim 1 or 2, wherein a surface of the substrate comprises a resin containing an organic substance and the photocatalyst layer is provided on the surface.

4. The photocatalyst-coated body according to claim 3, wherein the resin containing the organic substance is a non-silicone resin.

5. The photocatalyst-coated body according to any one of claims 1 to 4, wherein the photocatalyst particles are titanium oxide particles.

6. The photocatalyst-coated body according to any one of claims 1 to 5, wherein the inorganic oxide particles are silica particles.

7. The photocatalyst-coated body according to any one of claims 1 to 6, wherein the binder is at least one selected from the group consisting of a product obtained by drying hydrolyzable silicone, an amorphous inorganic oxide, a resin binder, and an alkaline silicate.

8. The photocatalyst-coated body according to any one of claims 1 to 7, wherein the photocatalyst particles have a number average particle diameter ranging from 10 nm or more to 100 nm or less calculated by measuring length of 100 particles randomly selected from particles located within a visible field magnified 200,000 times by a scanning electron microscope.

9. The photocatalyst-coated body according to any one of claims 1 to 8, wherein the inorganic oxide particles have a number average particle diameter ranging from more than 5 nm to 100 nm or less calculated by measuring length of 100 particles randomly selected from particles located within a visible field magnified 200,000 times by a scanning electron microscope.

10. The photocatalyst-coated body according to any one of claims 1 to 9, wherein the photocatalyst-coated body is used as an exterior material.

11. A photocatalytic coating liquid containing:

a solvent,
photocatalyst particles in the range between more than 1% by mass and less than 3% by mass,
inorganic oxide particles in the range between more than 92% by mass and less than 99% by mass, and
a binder in the range between 0% or more by mass and less than 5% by mass,
relative to 100% by mass of totality of dried substances in the photocatalytic coating liquid.

12. The photocatalytic coating liquid according to claim 11, wherein the photocatalyst particles are contained in the range between 1.1 % or more by mass and 2.9% or less by mass and the inorganic oxide particles are contained in the range between 92.1% or more by mass and 98.9% or less by mass, relative to 100% by mass of totality of dried substances in the photocatalytic coating liquid.

13. The photocatalytic coating liquid according to claim 11 or 12, the photocatalytic coating liquid being used by applying onto a substrate, wherein a surface of the substrate comprises a resin containing an organic substance and the photocatalyst layer formed by applying the photocatalytic coating liquid is provided on the surface.

14. The photocatalytic coating liquid according to claim 13, wherein the resin is a non-silicone resin.

15. The photocatalytic coating liquid according to any one of claims 11 to 14, wherein the photocatalyst particles are titanium oxide particles.

16. The photocatalyst-coated body according to any one of claims 10 to 14, wherein the binder is at least one selected from the group consisting of a hydrolyzable silicone, a precursor to the amorphous inorganic oxide, a resin binder, and an alkaline silicate.

17. The photocatalytic coating liquid according to any one of claims 11 to 16, wherein the inorganic oxide particles are silica particles.

18. The photocatalytic coating liquid according to any one of claims 11 to 17, wherein the photocatalyst particles have a number average particle diameter ranging from 10 nm or more to 100 nm or less calculated by measuring length of 100 particles randomly selected from particles located within a visible field magnified 200,000 times by a scanning electron microscope.

19. The photocatalytic coating liquid according to any one of claims 11 to 18, wherein the inorganic oxide particles have a number average particle diameter ranging from more than 5 nm to 100 nm or less calculated by measuring length of 100 particles randomly selected from particles located within a visible field magnified 200,000 times by a scanning electron microscope.

## EP 2 484 445 A1

**INTERNATIONAL SEARCH REPORT**

International application No.

PCT/JP2010/066837

### A. CLASSIFICATION OF SUBJECT MATTER

$B01J35/02$(2006.01)i, $B01J37/02$(2006.01)i, $C09D1/00$(2006.01)i, $C09D5/16$
(2006.01)i, $C09D7/12$(2006.01)i, $C09D201/00$(2006.01)i, $E04F13/02$(2006.01)i,
$E04F13/08$(2006.01)i

According to International Patent Classification (IPC) or to both national classification and IPC

### B. FIELDS SEARCHED

Minimum documentation searched (classification system followed by classification symbols)
$B01J21/00$-38/74, $C09D1/00$-201/10, $E04F13/00$-13/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/123278 A1 (TOTO Ltd.), 16 October 2008 (16.10.2008), | 1-3,5-13, 15-19 |
| Y | claims 1, 6 to 9, 11, 12, 16 to 19, 21; paragraphs [0007] to [0010], [0012] to [0017], [0019], [0020], [0022] to [0024]; examples & US 2008/0254975 A1 & EP 2127762 A1 & CA 2681142 A1 | 4,14 |
| X | JP 2008-272718 A (TOTO Ltd.), 13 November 2008 (13.11.2008), | 1-3,5-13, 15-19 |
| Y | claims; paragraphs [0010] to [0022], [0032] to [0043]; examples (Family: none) | 4,14 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 October, 2010 (26.10.10) | 09 November, 2010 (09.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**15**

**INTERNATIONAL SEARCH REPORT**

International application No.

PCT/JP2010/066837

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 11-169727 A  (Titan Kogyo, Ltd.),<br>29 June 1999 (29.06.1999),<br>claims 1 to 5; paragraphs [0040], [0041];<br>examples<br>(Family: none) | 4,14 |
| A | JP 2004-051644 A  (Toto Ltd.),<br>19 February 2004 (19.02.2004),<br>entire text<br>& US 2005/0277543 A1     & EP 1512728 A1 | 1-19 |
| A | WO 1998/003607 A1  (Toto Ltd.),<br>29 January 1998 (29.01.1998),<br>entire text<br>& US 6165256 A             & EP 0913447 A1 | 1-19 |
| A | WO 1997/000134 A1  (Nippon Soda Co., Ltd.),<br>03 January 1997 (03.01.1997),<br>entire text<br>& US 6228480 B1           & EP 0923988 A1<br>& EP 1955768 A1 | 1-19 |

Form PCT/ISA/210 (continuation of second sheet) (July 2009)

**INTERNATIONAL SEARCH REPORT**

| International application No. |
| --- |
| PCT/JP2010/066837 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The invention in claim 1 cannot be considered to be novel in the light of the inventions described in the following documents 1, 2, and does not have a special technical feature.
                                                        (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/066837 |

Continuation of Box No.III of continuation of first sheet(2)

Consequently, two inventions groups, that is, (1) the inventions in claim 1 and claims 2 - 10 dependent on claim 1, and (2) the inventions in claim 11 and claims 12 - 19 dependent on claim 11 have no technical relationship involving one or more of the same or corresponding special technical features, and therefore, said two invention groups cannot be considered to be so linked as to form a single general inventive concept.

The part of the present international application, which is considered to be main invention by this International Searching Authority, is relevant to the inventions in claims 1 - 10.

Document 1: WO 2008/123278 A1 (TOTO Ltd.), 16 October 2008 (16.10.2008)
Document 2: JP 2008-272718 A (TOTO Ltd.), 13 November 2008 (13.11.2008)

Form PCT/ISA/210 (extra sheet) (July 2009)

**EP 2 484 445 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H111999169727 A
- WO 9700134 A
- JP 4092434 B
- WO 9803607 A
- JP 2004051644 A